Europäisches Patentamt

European Patent Office

Office européen des brevets

(11) Veröffentlichungsnummer: **0 229 269 B1**

# (12) EUROPÄISCHE PATENTSCHRIFT

(45) Veröffentlichungstag der Patentschrift: **02.01.92**

(21) Anmeldenummer: **86116297.2**

(22) Anmeldetag: **24.11.86**

Die Akte enthält technische Angaben, die nach dem Eingang der Anmeldung eingereicht wurden und die nicht in dieser Patentschrift enthalten sind.

(51) Int. Cl.⁵: **G01B 11/24**

(54) **Verfahren zum Generieren eines die Querschnittsfläche eines etwa elliptischen Objektes repräsentierenden Signals.**

(30) Priorität: **04.12.85 DE 3542896**

(43) Veröffentlichungstag der Anmeldung:
**22.07.87 Patentblatt 87/30**

(45) Bekanntmachung des Hinweises auf die Patenterteilung:
**02.01.92 Patentblatt 92/01**

(84) Benannte Vertragsstaaten:
**AT DE SE**

(56) Entgegenhaltungen:
**DE-A- 1 809 990
DE-A- 2 555 975
US-A- 3 761 182
US-A- 3 806 253
US-A- 4 294 149**

**PROCEEDINGS OF THE IFAC - INTERNATIONAL FEDERATION OF AUTOMATIC CONTROL - 6TH WORLD CONGRESS, Boston, 24.-30. August 1975, Seiten 52.3/1-7, Instrument Soc. of America, Pittsburgh, US; B. HRUZ: "Automatic measurement and control in handling wood logs"**

(73) Patentinhaber: **SIEMENS AKTIENGESELL-SCHAFT
Wittelsbacherplatz 2
W-8000 München 2(DE)**

(72) Erfinder: **Hoffmann, Hans-Jürgen
Fasanenweg 26
W-8522 Niederndorf(DE)**

**Beschreibung**

Die Erfindung bezieht sich auf ein Verfahren zum Generieren eines näherungsweise den Durchmesser eines Baumstammes repräsentierenden Signals, wobei aus einer vorgegebenen Anzahl von Richtungen mit optischen Aufnahmegeräten die räumliche Lage der jeweiligen Schattenkanten des Baumstames erfaßt wird, wobei der Baumstamm von einem Polygon von Schattenkanten eingegrenzt wird und wobei aus den Schattenkantensignalen mit einem ersten Umsetzer die Eckpunkte des Polygon repräsentierende Lagesignale bestimmt werden.

Ein solches Verfahren ist aus US-A 4 294 149 bekannt. Dabei wird eine Durchmessererfassung anhand von Schattenkantensignalen vorgenommen, wobei zum einen die jeweiligen Schattenbreiten und zum anderen die jeweiligen Schattenkantenwinkel herangezogen werden.

Ein ähnliches Verfahren ist aus der DE-PS 25 55 975 bekannt. Die beiden Aufnahmegeräte erfassen dabei einen jeweils vom Objekt abgeschatteten Winkel. Ferner wird über eine Distanzmeßvorrichtung die jeweiligen Entfernung des Objekts gegenüber jedem Aufnahmegerät ermittelt und anhand von Winkel und Abstand wird der jedem der Aufnahmegeräte zugewandte Durchmesser des Objekts gebildet. Aus diesen beiden Durchmesser wird ein mittlerer Durchmesser errechnet und aus diesem ergibt sich die relevante Querschnittsfläche des zu erfassenden Objekts.

Aufgabe der Erfindung ist es, ein Verfahren der eingangs genannten Art so auszubilden, daß ohne den Weg über Winkelbetrachtungen aus einer leicht möglichen Flächenbetrachtung des Schattenkantenpolygons der Durchmesser des Objekts ermittelt werden kann.

Gemäß der Erfindung wird diese Aufgabe dadurch gelöst, daß folgende verfahrensschritte vorgesehen sind:

a) Aus den Lagesignalen wird mit einem zweiten Umsetzer ein die Fläche des Polygons angebendes Polygonflächensignal gebildet,

b) das Polygonflächensignal wird in einem dritten Umsetzer mit einem Faktor gewichtet, der dem Verhältnis der Fläche eines ideal kreisförmigen Baumstammes zur Fläche eines dieses entsprechend der Anordnung der Aufnahmegeräte umgrenzenden Polygons entspricht,

c) das somit die Fläche des Baumstamnes angebende Signal am Ausgang des dritten Umsetzers wird mit einem vierten Umsetzer (U4) mit einem Faktor $4/\pi$ gewichtet und radiziert und

d) das Ergebnis wird als ein dem mittleren Baumstammdurchmesser entsprechendes Durchmessersignal an eine zugeordnete Verarbeitungseinrichtung gemeldet.

Dabei liegt der Erfindung die Erkenntnis zugrunde, daß das Verhälnis der Fläche eines kreisförmigen Objektes zur Fläche eines dieses umspannenden Polygons dem Verhältnis der Fläche eines elliptischen Objektes zur Fläche des dieses umgrenzenden Polygons entspricht, wenn beide Objekte von einer vorgegebenen Anordnung von Aufnahmegeräten vermessen werden. In diesem Zusammenhang sei darauf verwiesen, daß eine bloße kreisförmige Idealisierung eines Baumstammes aus "PROCEEDINGS OF THE IFAC - INTERNATIONAL FEDERATION OF AUTOMATIC CONTROL - 6TH WORLD CONGRESS, 24-30 AUGUST 1975, SEITEN 52.3/1-7" bekannt ist.

Eine erste vorteilhafte Ausbildung der Erfindung ist dadurch gekennzeichnet, daß auch das die Fläche des Baumstammmes angebende Signal der Verarbeitungseinrichtung gemeldet wird.

Eine weitere Ausbildung der Erfindung ist dadurch gekennzeichnet, daß für die Umsetzer eine Datenverarbeitungsanlage vorgesehen ist. Dies ist insbesondere dann zweckmäßig, wenn eine derartige Datenverarbeitungsanlage im Rahmen der den Umsetzern nachzuordnenden Verarbeitungseinrichtung bereits vorhanden ist.

Ein Ausführungsbeispiel der Erfindung ist in der Zeichnung dargestellt und wird im folgenden näher erläutet.
Dabei zeigen:

FIG 1    eine Prinzipdarstellung des Verfahrens mit den zugehörigen technischen Einrichtungen,

FIG 2    eine erste Skizze zur Darstellung eines möglichen Polygonzugs bei einem kreisförmigen und

FIG 3    bei einem elliptischen Objekt.

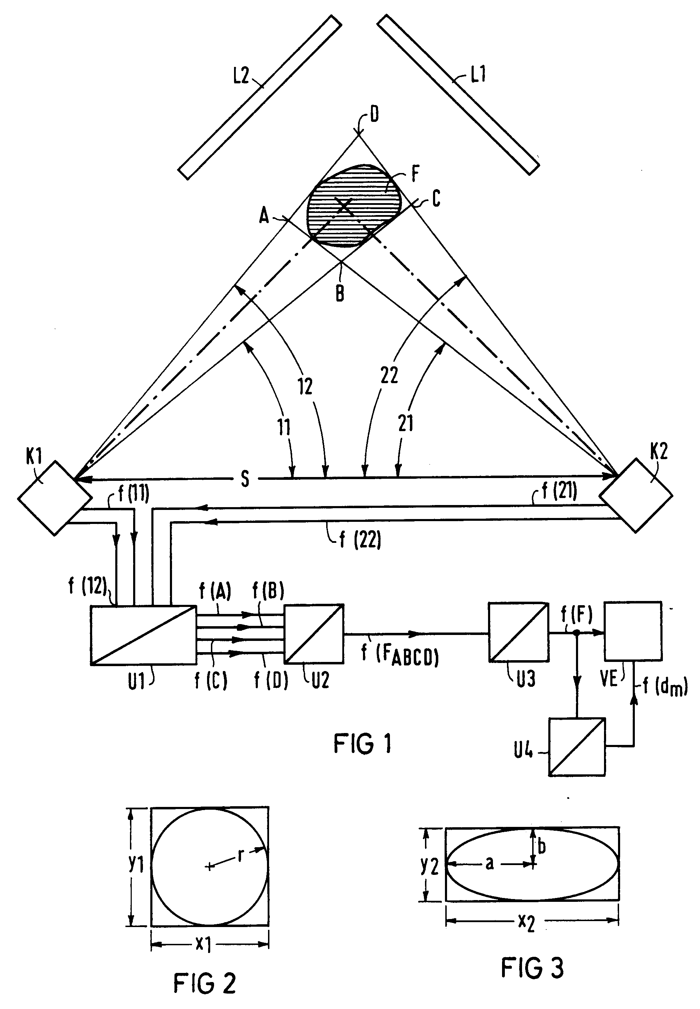

In der Darstellung gemäß FIG 1 sind zwei Schattenbildkameras K1 und K2 als optische Aufnahmegeräte in einem Abstand S so zueinander angeordnet, daß die optischen Achsen (strichpunktiert angedeutet) jeweils mit 45° bzw. 135° gegenüber der gedachten Verbindungslinie zwischen den Objekttiven des Schattenbildkameras K1 und K2 ausgerichtet sind. Die optischen Achsen schneiden sich demzufolge in einem Winkel von 90°.

Für beide Schattenbildkameras K1 und K2 sei jeweils ein gleicher erfaßbarer Maximalwinkel zum Sichtfeld hin vorgesehen, der allerdings kleiner ist, als der Winkel, in dem eine der Schattenbildkamera K1 zugeordnete Leuchtstoffröhre L1 bzw. eine der Schattenbildkamera K2 zugeordnete Leuchtstoffröhre L2 auf die jeweilige Schattenbildkamera K1 bzw. K2 einwirkt. Innerhalb eines solchermaßen sich ergebenden maximalen Sichtfeldes kann wie im folgenden näher erläutert wird, ein Objekt, das in seiner Form kreisförmig oder elliptisch ist, aufgrund der Lage der von diesem ausgehenden Schattenkanten optisch auf seine Querschnittsfläche hin vermessen werden. Bei diesem Objekt mag es sich beispielsweise um einen waagerecht schraffiert mit seiner Querschnittsfläche F angedeuteten Baumstamm handeln. Dieser Baumstamm erzeugt Schattenkanten, die in der Darstellung für die Schattenbildkamera K1 durch Abschattungswinkel 11,12 und für die Kamera K2 durch Abschattungswinkel 21,22 gekennzeichnet sind. Dabei sind die Schattenkanten in der Zeichnung mit durchgezogenen Linien angedeutet.

Von den Schattenbildkameras K1 und K2 werden der Lage der jeweiligen Schattenkanten entsprechende Schattenkantensignale f (11), f (12) bzw. f (21), f (22) erzeugt. Diese gelangen an einen Umsetzer U1, der unter Kenntnis der räumlichen Anordnung der Schattenbildkameras K1 und K2, d.h.unter Kenntnis des Abstandes S und der Ausrichtung der optischen Achsen der Schattenbildkameras K1 und K2, die Schnittpunkte der Schattenkanten 11 und 12 mit den Schnittpunkten der Schattenkanten 21 und 22 ermittelt. Diese Schnittpunkte sind in der Darstellung als A, B, C und D gezeigt. Diese Schnittpunkte der Schattenkanten stellen die Eckpunkte eines den Baumstamm begrenzenden Polygons A B C D dar. Entsprechende Lagesignale f (A), f (B), f (C) und f (D) werden vom Umsetzer U1 an einen Umsetzer U2 geleitet.

Im Umsetzer U2 wird aus der Kenntnis der Lage der Eckpunkte A, B, C, D des Polygons A B C D die von diesem Polygon umspannte Fläche bestimmt. Dies kann beispielsweise so erfolgen, daß zunächst die Fläche eines Dreiecks A B C ermittelt wird und diese Fläche dann zur Fläche eines Dreiecks A C D addiert wird. Die Fläche jedes der Dreiecke kann aus den Koordinaten der Eckpunkte ermittelt werden. Eine entsprechende mathematische Beziehung ist dem "Taschenbuch der Mathematik", Bronstein-Semendjajew, Teubner Verlagsgesellschaft, Leipzig, 1968, Seite 171 unten, entnehmbar.

Um von der Fläche des Polygons A B C D auf die Fläche des Objekts, in diesem Fall des Baumstammes, zu schließen, wird ein der Fläche des Polygons entsprechendes Polygonflächensignal f $(F_{A\ B\ C\ D})$ vom Umsetzer U2 an einem Umsetzer U3 geleitet, der aus diesem Signal unter Berücksichtigung einer Konstante für die Meßanordnung ein der Fläche des Objekts entsprechendes Signal f (F) erzeugt. Auf die Herleitung der obengenannten Konstante wird im folgenden noch eingegangen.

Das die Fläche F des zu vermessenden Objekts repräsentierende Signal f (F) gelangt zum einen an nachgeschaltete Verarbeitungseinrichtungen VE, die beispielsweise bei Kenntnis der Länge eines Baumstamms unter Berücksichtigung der jeweils ermittelten Fläche F das Volumen des Baumstammes bestimmen. Zum anderen gelangt das die Fläche F repräsentierende Signal f (F) an einen Umsetzer U4, der durch Bewerten der Fläche F mit einem Faktor $4/\pi$ und Radizieren des Ergebnisses auf einen mittleren Durchmesser $d_m$ des Objekts schließt und ein entsprechendes Durchmessersignal f $(d_m)$ an die Verarbeitungseinrichtung VE weiterleitet.

Zur Ermittlung der obengenannten Konstante für den Umsetzer U3 sei zunächst auf die Darstellungen gemäß Fig.2 und Fig.3 verwiesen.

In Fig.2 ist ein ideal kreisförmiges Objekt mit einem Halbmesser r gezeigt, das von einem Quadrat umspannt wird, dessen gleiche Kantenlänge in der Abszissenrichtung mit $x_1$ und in der Ordinatenrichtung mit $y_1$ bezeichnet sind. Die Kantenlänge entspricht demzufolge dem Zweifachen des Halbmessers r. Für die Fläche des Kreises $F_K$ ergibt sich die folgende Beziehung:

$$F_K = \pi r^2$$

Für die Fläche des Quadrats $F_Q$ gilt:

$$F_Q = 4r^2$$

Der Quotient aus Kreisfläche $F_K$ zur Quadratfläche $F_Q$ ergibt sich als:

$$q_1 = \pi/4$$

In der Darstellung gemäß Fig.3 ist eine Ellipse gezeigt, die in ein Rechteck einbeschrieben ist,das in Abszissenrichtung eine Länge $x_2$ und in Ordinatenrichtung eine Länge $y_2$ aufweist. Diese Ellipse hat einen kleinen Halbmesser b und einen großen Halbmesser a. Die Fläche $F_E$ der Ellipse ergibt sich als:

$$F_E = \pi\ (a\ .\ b)$$

Die Fläche des Rechtecks ergibt sich unter der Voraussetzung, daß die Länge $x_2$ dem Zweifachen des großen Halbmessers a und die Länge $y_2$ dem Zweifachen des kleinen Halbmessers b entspricht, als:

$$F_R = 4\ .\ a\ .\ b$$

Der Quotient $q_2$ aus Fläche $F_E$ der Ellipse und Fläche $F_R$ des Rechtecks ergibt sich demzufolge als:

$$q_2 = \pi/4$$

Da die Quotienten $q_1$ und $q_2$ gleich sind, ist ersichtlich, daß sowohl für ideal kreisförmige als auch für ideal elliptische Querschnitte das Verhältnis der zugehörigen Querschnittsflächen zum zugehörigen umspannenden Polygonzug gleich ist. Weil zu vermessende gerundete Objekte natürlicher Herkunft, insbesondere Baumstämme, mit ausreichend großer Genauigkeit in ihrer Form durch eine Ellipse sich annähern lassen, kann daher auch für elliptische Formen prinzipiell die Konstante für den Umsetzer U3 als Quotient aus Polygonfläche um ein ideal kreisförmiges Objekt zu dessen Kreisfläche ermittelt werden.

Analog ließe sich zeigen, daß bei linearer konformer Abbildung der Darstellungen gemäß Figur 2 und 3 in beliebiger, z.B. auch schräger Richtung, sich der gleiche Quotient ergibt.

Während bei den Anordnung gemäß Fig.2 und Fig.3 von Polygonen ausgegangen wird, die einer genau rechteckigen Form genügen, wie sich diese beispielsweise dann ergeben, wenn mit rechtwinklig zueinander ausgerichteten Lichtvorhängen als Aufnahmegeräten gearbeitet wird, ergibt sich für die Anordnung gemäß Fig.1 mit Schattenbildkameras K1 und K2 jeweils ein etwas gegenüber der Rechteckform verzerrter Polygonzug. Aber auch hierbei kann der Quotient für ideal kreisförmige Objekte mit für die Praxis ausreichender Genauigkeit auf elliptische Objekte im vollen Sichtbereich der Schattenbildkameras übertragen werden. Die Konstante für den Umsetzer U3 ergibt sich somit stets als $\pi/4$.

In der Darstellung ist von zwei Schattenbildkameras K1 und K2 ausgegangen, deren optische Achsen sich in einen Winkel von 90° schneiden. Dieser Winkel könnte jedoch bedarfsweise variiert werden. Ebenso wäre es auch möglich, drei Aufnahmegeräte vorzusehen, die sowohl als Schattenbildkameras als auch als Lichtvorhänge ausgebildet sein könnten. Das Verhältnis von Objektfläche zur Polygonfläche würde sich gegenüber der im Beispiel gezeigten Lösung auf $\pi/\sqrt{12}$ erhöhen, wenn sich die optischen Achsen der Aufnahmegeräte sternförmig und gleichwinklig kreuzen. Eine derartige Kameraanordnung für drei Schattenbildkameras ist aus der Druckschrift "LIGNOTRON" der Siemens AG, Bestellnummer A19100-E872-A180 bekannt. Sofern mit mehr als zwei Aufnahmegeräten ein zu vermessendes Objekt bestimmt wird, ist neben einer höheren Meßgenauigkeit auch die Möglichkeit gegeben, die Lage der Ovalitätsachse zu bestimmen.

## Patentansprüche

1. Verfahren zum Generieren eines näherungsweise den Durchmesser eines Baumstammes repräsentierenden Signals, wobei aus einer vorgegebenen Anzahl von Richtungen mit optischen Aufnahmegeräten die räumliche Lage der jeweiligen Schattenkanten des Baumstammes erfaßt wird, wobei der Baumstamm von einem Polygon von Schattenkanten eingegrenzt wird und wobei aus den Schattenkantensignalen mit einem ersten Umsetzer die Eckpunkte des Polygons repräsentierende Lagesignale bestimmt werden, **gekennzeichnet** durch die folgenden Verfahrensschritte:

a) Aus den Lagesignalen (f (A), f (B), f (c), f (D)) wird mit einem zweiten Umsetzer (U2) ein die Fläche des Polygons (A B C D) angebendes Polygonflächensignal (f ($F_{A B C D}$)) gebildet,

b) das Polygonflächensignal (f ($F_{A B C D}$)) wird in einem dritten Umsetzer (U3) mit einem Faktor gewichtet, der dem Verhältnis der Fläche eines ideal kreisförmigen Baumstammes zur Fläche eines dieses entsprechend der Anordnung der Aufnahmegeräte (K1, K2) umgrenzenden Polygons entspricht,

c) das somit die Fläche des Baumstammes angebende Signal (f (F)) am Ausgang des dritten Umsetzers U3) wird mit einem vierten Umsetzer (U4) mit einem Faktor $4/\pi$ gewichtet und radiziert und

d) das Ergebnis wird als ein dem mittleren Baumstammdurchmesser ($d_m$) entsprechendes Durchmessersignal (f ($d_m$)) an eine zugeordnete Verarbeitungseinrichtung (VE) gemeldet.

2. Verfahren nach Anspruch 1, **dadurch gekennzeichnet,** daß auch das die Fläche des Baumstamms angebende Signal (f (F)) der Verarbeitungseinrichtung (VE) gemeldet wird.

3. Verfahren nach Anspruch 1 oder 2, **dadurch gekennzeichnet,** daß für die Umsetzer (U1,U2, U3,U4) eine Datenverarbeitungsanlage vorgesehen ist.

## Claims

1. A method for generating a signal representing approximately the diameter of a tree trunk, wherein the spatial position of the respective shadow edges of the tree trunk are determined from a specified number of directions with optical surveying apparatus, wherein the tree trunk is delimited by a polygon of shadow edges, and wherein the position signals representing corner points of the polygon are determined from the shadow edge signals with a first converter, characterised by the following stages of method:

a) A polygon area signal (f ($F_{A B C D}$)), indicating the area of the polygon (A B C D) is formed from the position signals (f (A), f (B), f (C), f (D)) with a second converter (U2),

b) The polygon area signal (f (F$_{A B C D}$)) is weighted in a third converter (U3) with a coefficient, which corresponds to the ratio of the area of an ideal circular tree trunk to the area of a polygon defining this corresponding with the arrangement of the surveying apparatus (K1, K2),

c) The signal indicating the area of the tree trunk (f (F)) at the output of the third converter (U3) is weighted and has the root extracted with a fourth converter (U4) with a coefficient 4/$\pi$ and

d) The result is announced as a diameter signal (f (d$_m$)) corresponding to the average tree trunk diameter (d$_m$) to an associated processing device (VE).

2. A method according to claim 1, characterised in that the signal (f (F)) indicating the area of the tree trunk is also announced to the processing device (VE).

3. A method according to claim 1 or 2, characterised in that a data processing unit is provided for the converters (U1, U2, U3, U4).

**Revendications**

1. Procédé pour générer un signal représentant approximativement le diamètre d'un tronc d'arbre, selon lequel avec des appareils d'enregistrement optiques, on détermine la position spatiale des limites respectives d'ombres du tronc d'arbre dans un nombre prédéterminé de directions, on circonscrit le tronc d'arbre avec un polygone de limites d'ombres, et à partir des signaux des limites des ombres, on détermine, à l'aide d'un premier convertisseur, les signaux de positions représentant les sommets du polygone, caractérisé par les étapes opératoires suivantes :

a) à partir des signaux de position (f (A), f (B), f (C), f (D)), on forme, au moyen d'un second convertisseur (U2), un signal (f (F$_{A B C D}$)) de surface polygonale, qui indique la surface du polygone (A B C D),

b) on pondère le signal (f (F$_{A B C D}$)) de la surface polygonale, dans un troisième convertisseur (U3), par un facteur qui correspond au rapport de la surface d'un tronc d'arbre circulaire idéal à la surface d'un polygone circonscrit à ce tronc d'arbre en fonction de la disposition des appareils d'enregistrement (K1,K2),

c) on pondère avec un facteur 4/p le signal (f (F)), indiquant par conséquent la surface du tronc d'arbre et présent à la sortie du troisième convertisseur (3) et on en prend la racine carrée au moyen d'un quatrième convertisseur (U4), et

d) on envoie le résultat en tant que signal de diamètre (f (d$_m$)), qui correspond au diamètre moyen (d$_m$) du tronc d'arbre, à un dispositif associé de traitement (VE).

2. Procédé suivant la revendication 1, caractérisé par le fait qu'on envoie également le signal (f (F)) indiquant la surface du tronc d'arbre au dispositif de traitement (VE).

3. Procédé suivant la revendication 1 ou 2, caractérisé par le fait que pour les convertisseurs (U1, U2, U3, U4), on prévoit une installation de traitement de données.

FIG 1

FIG 2

FIG 3